# EUROPEAN PATENT SPECIFICATION

(11) **EP 4 509 247 B1**
(45) Date of publication and mention of the grant of the patent: **04.02.2026**
(21) Application number: 23202894.4
(22) Date of filing: 11.10.2023
(51) Int. Cl.: B22F 1/0545, B22F 1/14, B82Y 40/00, B01D 15/00, B01J 13/00, C22B 11/00, B22F 9/24

(54) **A METHOD FOR CONCENTRATING OF COLLOIDAL SOLUTIONS OF NOBLE METALS**
VERFAHREN ZUR KONZENTRIERUNG VON KOLLOIDALEN LÖSUNGEN VON EDELMETALLEN
PROCÉDÉ DE CONCENTRATION DE SOLUTIONS COLLOÏDALES DE METAUX NOBLES

(30) Priority: 16.08.2023 PL 44582123
(43) Date of publication of application: 19.02.2025
(73) Proprietor: Akademia Gorniczo-Hutnicza im. Stanislawa Staszica w Krakowie, 30-059 Krakow (PL)
(72) Inventor: Luty-Blocho, Magdalena, 32-031 Mogilany (PL); Skawinska, Katarzyna, 48-200 Prudnik (PL); Szot, Aleksandra, 31-975 Kraków (PL); Wojnicki, Marek, 30-128 Kraków (PL); Zabinski, Piotr, 30-124 Kraków (PL)
(74) Representative: Pietruszynska, Elzbieta

(56) References cited:
- ES-A1- 2 931 215
- JP-A- 2016 108 635
- PL-B1- 225 193
- US-A1- 2019 015 809

## Description

The invention relates to a method for concentrating of colloidal solutions of noble metals. The invention relates to the field of concentrating of metal nanoparticles.

One of the most frequently used methods for producing nanoparticles, including metal nanoparticles, is the chemical reduction method. This method is cheap, fast and does not require complex and expensive devices as is the case of other methods for producing nanoparticles, e.g. the physical method. The chemical reduction method involves the reduction of metal ions in e.g. water using a solution containing a reducing agent (e.g. sodium citrate, sodium borohydride, etc.) to atoms. These, in turn, merge into metastable clusters, which, after reaching a critical radius size (thoroughly described by the LaMer mechanism), form nanoparticles. Nanoparticles can continue to grow until the substrates (i.e. metal ions or reducing agent) are exhausted. As a result of these processes, a colloid is obtained. By definition, a colloid contains solid phase particles ranging in size from 1 - 500 nm, dispersed in a liquid phase, e.g. in an aqueous solvent. In the process for producing colloidal noble metal, its morphology and stability are very important issues. Stability of colloidal metal can be achieved in three ways: (1) using electrostatic stabilization, which is accomplished by using a reagent that forms, around the nanoparticle, a charge of the opposite sign relative to a nanoparticle charge; (2) using steric stabilization, which involves the adsorption of particles of another compound (usually not involved in the reduction reaction) on the surface of the formed nanoparticles and thus physically blocking its surface against interactions with other particles (minimizing the attractive forces between the particles); (3) using electrosteric stabilization (also called mixed stabilization), which involves the synergistic effect of both types of stabilization mentioned above. Mixed stabilization is most often implemented by the addition of an organic compound (e.g. polymer), the chain of which generates both a charge and has the ability to surface adsorption on the surface of the nanoparticle. The use of appropriate stabilization is one of the basic issues, apart from morphology, that allow the use of colloids, but also determine their use. For example, electrostatically stabilized particles with a size (diameter) of 2-5 nm and a spherical shape will be used in catalysis. However, particles of the same shape and size in the range of 5-20 nm (diameter), sterically stabilized or mixed, will be used in medical applications, e.g. in cancer diagnostics or in Raman analysis to amplify the signal during the analysis of various chemical compounds, e.g. Surface enhanced Raman scattering with gold nanoparticles: effect of particle shape, Anal. Methods, 2014, 6, 9116-9123, https://doi.org/10.1039/C4AY02112F. Patent application US2019/015809 Al also discloses a process of making nanoparticle colloidal dispersions, in particular noble metal dispersions and lists a variety of methods to choose from to concentrate the dispersion by removing some or all of the solvent.

In each of the above-mentioned cases, a very important issue is the concentration of the colloidal metal, which is usually too low to use the colloid immediately after synthesis. Therefore, various techniques are used to concentrate them, which are described below. Various methods for concentrating of colloids are known, including noble metal colloids. Typically, the process for concentrating of noble metals colloids, e.g. gold, is achieved by using centrifuges designed for this purpose. This method (M1) allows to concentrate colloidal gold to the concentration of 0,5 g/l (Tissue distribution of gold nanoparticles after single intravenous administration in mice, Pharmacological ReportsVolume 65, Issue 4, 2013, Pages 1033-1038). The disadvantage of this method is that it is not suitable for concentrating charge-stabilized colloids - too high centrifugation speed needed to effectively separate the liquid phase from the solid phase causes aggregation of particles and often leads to the formation of a solid metallic precipitate (the colloid sample is irretrievably lost) on the walls of the container used for centrifugation (Eppendorf). Moreover, it is labor-intensive, and the optimal conditions, i.e. centrifugation speed and time, must be selected experimentally.

Another technique of colloidal concentration, e.g., for silver, involves conducting a process of synthesis (using the method of chemical reduction) in a system of flow microreactor and additionally in microdroplets acting as nanoreactors (M2) (Micromachines (Basel). 2019 Apr; 10(4): 274.; doi: 10.3390/mi10040274). In this way, a concentration of silver particles of 1 mM was obtained. This technique has the following disadvantages: the need to use a microreactor, the need to use an organic phase to produce the nanoreactor and a labor-intensive procedure. Another method for concentrating of colloids is a use of an extraction process to concentrate them (M3). This process involves a synthesis of colloidal silver, e.g. by chemical reduction using e.g. sodium borohydride in water as a solvent. Then, the appropriate volume of colloid is mixed with a small volume of a surfactant, e.g. ODA (octadecylamine), dissolved in an organic solvent, e.g. hexane (J Colloid Interface Sci. 2003 Aug 15;264(2):396-401.doi: 10.1016/S0021-9797(03)00567-8). As a result of vigorous shaking of the mixture prepared in this way, ODA is adsorbed onto the surface of the silver particles and then extracted into the organic phase. As a result of this process, the particles themselves change their properties from hydrophilic to hydrophobic. As a result of extracting silver nanoparticles from the aqueous phase to the organic phase, silver nanoparticles with a quite high concentration can be obtained compared to the original sample, and the colloidal silver retains its original morphology. Without a doubt, a major disadvantage of this method is the fact that colloidal silver changes its surface properties because it is dispersed in the organic phase, which may significantly limit its use, for example for medical purposes. The disadvantage of this method is that the particles change their surface properties from hydrophilic to hydrophobic. Moreover, this method is not suitable for concentrating sterically stabilized particles.

Another method for concentrating of colloids, e.g. for gold, is to evaporate a solvent (e.g. water) during drying in dryers (M4a). However, temperature can change a particle morphology. Moreover, using too high temperature for drying usually leads to coagulation of the particles, while too low temperature significantly prolongs their concentration time. This method is not suitable for concentrating electrostatically stabilized particles.

A different method for concentrating is the evaporation of solvent (M4b) by using an inert gas, such as nitrogen, argon. This process involves blowing an inert gas into a container containing a colloidal solution of metal. The efficiency of the process can be adjusted by the gas flow rate. This method is time-consuming and requires the use of additional gases.

As can be seen, the mentioned methods for concentrating of colloidal metals have their limitations. The morphology of the nanoparticles and the type of stabilization used influence which method are used. The available devices are also important (e.g. centrifuge in the M1 method, microreactor in the M2 method). Additionally, it is worth paying attention to the fact that the discussed methods of concentrating colloids differ in the way they separate the concentrated colloid phase from the solvent. Therefore, there is a need to develop a method for concentrating of colloidal solutions of noble metals, which is an alternative to the currently used methods, devoid of the above-mentioned disadvantages. The purpose of the invention is to provide a method for concentrating of the solid phase dispersed in the liquid phase (solvent - water), which can be used to concentrate both noble metal colloids and other compounds, including organometallic compounds.

The invention relates to a method for concentrating of colloidal solutions of noble metals, characterized in that it comprises adding a compound based on a cross-linked polymer with 3D structure in the form of hydrogel to a colloidal solution of a noble metal.

Preferably, the compound based on the cross-linked polymer with 3D structure is polyacrylamide, sodium allylsulfonate copolymer or poly(hydroxamic acid) copolymer, or a mixture of any of them.

The compound based on the cross-linked polymer with 3D structure is added to the colloidal solution of the noble metal in an amount of 0,02 - 0,2 g per 10 ml of the solution. Preferably, the compound based on the cross-linked polymer with 3D structure is added to the colloidal solution of the noble metal in the form of spheres with diameter of 2 mm, in an amount of 1 sphere per 1 ml of the solution.

The compound based on a cross-linked polymer with 3D structure in the present invention is used in the form of a hydrogel. In this specification, this compound is interchangeably referred to as a hydrogel. After introducing the hydrogel into the solution containing colloidal metal, the polymer swells over time as a result of the absorption of water molecules into the polymer network. Water molecules are attached to the polymer functional groups that exhibit hydrophilic properties. Then, water molecules bind in the polymer network and form a hydrogel. The cross-linked structure created in this way swells until it is maximally "charged" with water molecules. The amount of water absorbed depends on the size and number of hydrophilic groups of the polymer used. The method according to the invention can be carried out at different rate depending on needs, which means that it is characterized by high work comfort and flexibility. In order to speed up the dynamics of the process of concentration, the amount of polymer introduced can be increased or the temperature of the process can be raised. The tests confirmed that this method can be used both at room temperature (20-22°C) and at elevated temperatures, which accelerates the process of water absorption into the hydrogel structure (optimally 45°C). The effect of changing the concentration itself is determined by the absorption capacity of the hydrogel and the ratio of the mass of the hydrogel to the mass of colloid in the concentrated system.

Unlike the methods known in the prior art, the method according to the invention allows for the controlled removal of a solvent, but also a residual salts formed as a result of the reduction reaction of metal ions and the reducing agent, or allows for the removal of the excess of the unreacted reducing agent itself, etc., which is important from the point of view of medical and analytical applications. The advantage of the method according to the invention is also high efficiency, simplicity of execution, short concentration time, ability to carry out the process at room temperature (elimination of the unfavorable effect associated with particle aggregation due to high temperature) and low price (no need to purchase centrifuges, gases, dryers, etc.).

The invention has been illustrated by the following examples. The examples included: synthesizing a colloid, adding a hydrogel-based compound in the form of spheres to a given volume of the colloid, and then removing the sphere from the solution when the sphere reaches a diameter of approximately 1 cm or the colloid reaches an expected concentration. Commercially available, transparent AG91D spheres from APTEL, consisting of polyacrylamide, sodium allylsulfonate copolymer and poly(hydroxamic acid) copolymer, were used as the hydrogel spheres.

### Example 1. Colloidal, electrostatically stabilized gold

300 µl of 0.1 M base gold solution was added to a 100 ml flask, then filling up the flask to 100 ml with deionized water. 5 ml was removed from the diluted solution and the solution was heated for 30 min to reach 94 °C, while equalizing the temperature throughout the entire solution volume using a magnetic stirrer. In parallel, a solution of 3-Na-citrate-2OH was prepared by adding 0.5 g of 3-Na-citrate-2OH to a 50 ml flask and then filling up the flask with deionized water. 5 ml of the prepared 3-Na-citrate-2OH solution was added to the gold solution when it reached 94 °C. The solution prepared in this way was held for 5 min at 100 °C in order to establish the equilibrium of the solution. The synthesized colloid was left to stabilize for 24 h.

2 hydrogel spheres with a mass of 0.02865 g per 10 ml and, in order to increase the dynamics of the process, 8 spheres with a mass of 0.1146 g per 10 ml were thrown into the obtained colloid, in parallel. The concentration change effect in the case of slow concentrating for the first 2 h resulted in an increase of 0.00006 M for an initial concentration of 0.0003 M, and in the case of dynamic concentrating for the first 30 min resulted in an increase of 0.0001 M for an initial concentration of 0.0003 M.

### Example 2. Colloidal, sterically stabilized gold

150 µl of 0.1 M base gold solution was added to a 100 ml flask, then filling up the flask to 100 ml with deionized water. 5 ml was removed from the diluted solution and the solution was heated for 30 min to reach 94 °C, while equalizing the temperature throughout the entire solution volume using a magnetic stirrer. In parallel, a solution of 3-Na-citrate-2OH was prepared by adding 0.5 g of 3-Na-citrate-2OH to a 50 ml flask and then filling up the flask with deionized water. 5 ml of the prepared 3-Na-citrate-2OH solution was added to the gold solution when it reached 94 °C. The solution prepared in this way was held for 5 min at 100 °C in order to establish the equilibrium of the solution. The synthesized colloid was left to stabilize for 12 h. In the last stage of the synthesis, 0.296 g of poly(vinyl alcohol) was weighed, which was then added to the previously prepared cold colloid and mixed using a magnetic stirrer. The prepared colloid was left to stabilize for 12 h. In order to neutralize the electrostatic stabilization, 0.0122 g of NaClO₄ was added to the previously prepared colloid, achieving a break in the ionic strength at the lower limit of 0.01 M. The prepared colloid was left to stabilize for 12 hours.

2 hydrogel spheres with a mass of 0.02865 g per 10 ml were thrown into the obtained colloid. The concentration change effect for the first 2 h resulted in an increase of 0,000008 M for an initial concentration of 0,00015 M.

### Example 3. Colloidal gold stabilized by mixing

150 µl of 0.1 M base gold solution was added to a 100 ml flask, then filling up the flask to 100 ml with deionized water. 5 ml was removed from the diluted solution and the solution was heated for 30 min to reach 94 °C, while equalizing the temperature throughout the entire solution volume using a magnetic stirrer. In parallel, a solution of 3-Na-citrate-2OH was prepared by adding 0.5 g of 3-Na-citrate-2OH to a 50 ml flask and then filling up the flask with deionized water. 5 ml of the prepared 3-Na-citrate-2OH solution was added to the gold solution when it reached 94 °C. The solution prepared in this way was held for 5 min at 100 °C in order to establish the equilibrium of the solution. The synthesized colloid was left to stabilize for 12 h. In the last stage of the synthesis, 0.296 g of poly(vinyl alcohol) was weighed, which was then added to the previously prepared cold colloid and mixed using a magnetic stirrer. The prepared colloid was left to stabilize for 12 h.

2 hydrogel spheres with a mass of 0.02865 g per 10 ml were thrown into the obtained colloid. The concentration change effect for the first 2 h resulted in an increase of 0,000012 M for an initial concentration of 0,00015 M.

As can be seen from the above examples, the method according to the invention allowed for quick removal of water and thus effective concentration of the colloidal metal. Due to the insensitivity to the type of stabilization used, the method according to the invention is perfectly suitable for all types of stabilization, with the greatest effectiveness observed in case of electrostatic stabilization.

The method according to the invention can be used to concentrate both noble metal colloids and other compounds, including organometallic compounds. The method according to the invention is applicable to sample preparation (concentration, including nanomaterials) for microscopic analyzes in order to examine the morphology of synthesized particles, for use in analytics for spectroscopic analyzes (as a stage of samples preparation for analysis), e.g. analyzes using NMR, IR, FTIR, DLS, etc. The solution allows for the concentration of organometallic/organic materials with dimensions that make it impossible to use commercially available filters - application in purification, filtration, separation. The method according to the invention is also designed for medical applications in cancer diagnostics, in studies on the cytotoxicity of nanoparticles (e.g. imaging, diagnostics).

## Claims

1. A method for concentrating of colloidal solutions of noble metals, **characterized in that** it comprises adding a compound based on a cross-linked polymer with 3D structure in the form of hydrogel to a colloidal solution of a noble metal, the functional groups of the compound based on the cross-linked polymer with 3D structure are hydrophilic, and the compound is added to the colloidal solution of the noble metal in an amount of 0,02 - 0,2 g per 10 ml of the solution.

2. The method according to claim 1, **characterized in that** the compound based on the cross-linked polymer with 3D structure is polyacrylamide, sodium allylsulfonate copolymer or poly(hydroxamic acid) copolymer, or a mixture of any of them.

3. The method according to claims 1-2, **characterized in that** the compound based on the cross-linked polymer with 3D structure is added to the colloidal solution of the noble metal in the form of spheres with diameter of 2 mm, in an amount of 1 sphere per 1 ml of the solution.

## Patentansprüche

1. Verfahren zur Konzentrierung kolloidaler Edelmetalllösungen, **dadurch gekennzeichnet, dass** der Verfahren eine Zugabe einer Verbindung auf Basis eines vernetzten Polymers mit 3D-Struktur in Form eines Hydrogels zur kolloidalen Edelmetalllösung umfasst, die funktionellen Gruppen der Verbindung auf Basis eines vernetzten Polymers mit 3D-Struktur sind hydrophil, und der kolloidalen Edelmetalllösung 0,02 - 0,2 g der Verbindung pro 10 ml Lösung zugesetzt wird.

2. Verfahren nach Anspruch 1, **dadurch gekennzeichnet, dass** es sich bei der Verbindung auf Basis eines vernetzten Polymers mit 3D-Struktur um Polyacrylamid, Natriumallylsulfonat-Copolymer oder Polyhydroxamsäure-Copolymer oder eine Mischung von diesen handelt.

3. Verfahren nach Anspruch 1-2, **dadurch gekennzeichnet, dass** die Verbindung auf Basis eines vernetzten Polymers mit einer 3D-Struktur in Form von Kügelchen mit einem Durchmesser von 2 mm der kolloidalen Lösung des Edelmetalls in einer Menge von 1 Kügelchen pro 1 ml Lösung zugesetzt wird.

## Revendications

1. Procédé de concentration de solutions colloïdales de métaux nobles, **caractérisé en ce qu'**il comprend l'ajout à la solution colloïdale du métal noble d'un composé à base de polymère réticulé à structure 3D sous forme d'hydrogel, les groupes fonctionnels du composé à base de polymère réticulé à structure 3D sont hydrophiles, et le composé est ajouté à la solution colloïdale du métal noble à raison de 0,02 à 0,2 g pour 10 ml de solution.

2. Procédé selon la revendication 1, **caractérisé en ce que** le composé à base de polymère réticulé à structure 3D est un polyacrylamide, un copolymère de sulfonate d'allyle de sodium ou un copolymère d'acide polyhydroxamique, ou un mélange de ceux-ci.

3. Procédé selon les revendications 1-2, **caractérisé en ce que** le composé à base d'un polymère réticulé à structure 3D est ajouté à la solution colloïdale du métal noble sous forme de billes d'un diamètre de 2 mm, à raison de 1 bille par 1 ml de solution.
